# DEMANDE DE BREVET EUROPEEN

(11) **EP 2 520 983 A1**
(43) Date de publication de la demande: **07.11.2012**
(21) Numéro de dépôt: 11164624.6
(22) Date de dépôt: 03.05.2011
(51) Int. Cl.: G04B 1/14, G04B 1/22, F16F 1/32, F16F 1/10

(54) **Barillet comportant des moyens élastiques d'accumulation d'énergie**

(71) Demandeur: Nivarox-FAR S.A., 2400 Le Locle (CH)
(72) Inventeur: Charbon, Christian, 2054, Chézard-St-Martin (CH)
(74) Mandataire: Couillard, Yann Luc Raymond

(57) **Abrégé**

L'invention se rapporte à un barillet (11, 21) comportant une boîte (13, 23) destinée à recevoir un arbre de pivotement (15, 25) et au moins un ressort (17, 27, 37, 47, 57, 77), ledit au moins un ressort en forme de spirale étant monté entre la paroi interne de la boîte (13, 23) et la paroi externe de l'arbre de pivotement (15, 25), et pouvant être armé pour fournir de l'énergie mécanique. Selon l'invention, le barillet (11, 21) comporte en outre un dispositif d'augmentation (12, 22, 22') de couple dudit au moins un ressort comprenant des moyens élastiques d'accumulation d'énergie (14, 24, 24') rapportés sur ledit ressort afin que le couple du barillet (11, 21) soit personnalisé en fonction de la tension d'armage dudit au moins un ressort. L'invention concerne le domaine des pièces d'horlogerie.

## Description

### Domaine de l'invention

L'invention se rapporte à un barillet comportant un dispositif d'augmentation de couple et plus, particulièrement, un tel barillet comprenant des moyens élastiques d'accumulation d'énergie supplémentaire.

### Arrière plan de l'invention

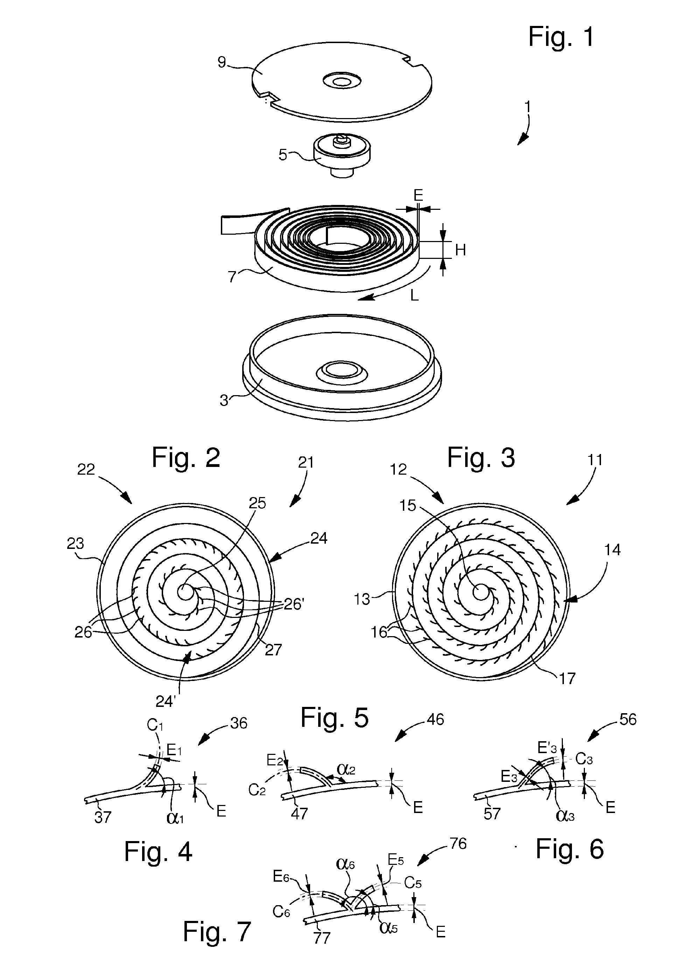

Les barillets 1 actuels, comme illustré à la figure 1, sont généralement formés par une boîte 3 appelée « tambour » et destinée à recevoir un arbre de pivotement 5 et un ressort 7. Le ressort 7 en forme de spirale comporte une longueur L, une hauteur H et une épaisseur E. Le ressort 7 est monté entre la paroi interne de la boîte 3 et la paroi externe de l'arbre de pivotement 5. La boîte 3 est généralement fermée par un couvercle 9. Le ressort 7 peut ainsi être armé pour fournir de l'énergie mécanique au mouvement d'une pièce d'horlogerie auquel il sera intégré.

Cette configuration des ressorts actuels pose le problème de ne pas fournir un couple constant tout au long de leur détente ce qui induit une variation d'amplitude de l'oscillation du balancier néfaste à la précision du mouvement horloger.

De plus, la forme et l'encombrement au repos des ressorts actuels sensiblement en S sont difficilement conciliables avec une fabrication du type positif, c'est-à-dire photolithographie puis électroformage, ou du type négatif, c'est-à-dire photolithographie puis gravage. En effet, les substrats utilisés ne sont pas assez grands et/ou un nombre insuffisant de ressorts est fabriqué sur un seul substrat en rendant le coût de production inacceptable.

### Résumé de l'invention

Le but de la présente invention est de pallier tout ou partie les inconvénients cités précédemment en proposant un barillet dont le ressort au repos comporte un encombrement plus restreint et dont le couple est moins dépendant du degré d'armage du ressort.

A cet effet, l'invention se rapporte à un barillet comportant une boîte destinée à recevoir un arbre de pivotement et au moins un ressort, ledit au moins un ressort en forme de spirale étant monté entre la paroi interne de la boîte et la paroi externe de l'arbre de pivotement, et pouvant être armé pour fournir de l'énergie mécanique caractérisé en ce que le barillet comporte en outre un dispositif d'augmentation de couple dudit au moins un ressort comprenant des moyens élastiques d'accumulation d'énergie rapportés sur ledit ressort afin que le couple du barillet soit personnalisé en fonction de la tension d'armage dudit au moins un ressort.

On comprend donc que la quantité de matière du ressort qui « travaille », c'est-à-dire celle susceptible d'être déformée pour emmagasiner de l'énergie, est très sensiblement augmentée ce qui permet au barillet de garder un couple sensiblement équivalent ou supérieur par rapport à ceux comportant des ressorts actuels en S.

Cela permet également de pouvoir personnaliser le couple du barillet en le rendant, par exemple, plus constant pour améliorer l'isochronisme d'une pièce d'horlogerie. En effet, l'encombrement réduit d'un ressort selon l'invention étant plus adapté aux dits procédés de fabrication du type positif et/ ou négatif, il est possible de fabriquer en série des ressorts asymétriques qui autorisent la personnalisation du couple de leur barillet en fonction leur tension d'armage.

Conformément à d'autres caractéristiques avantageuses de l'invention :
- les moyens élastiques d'accumulation d'énergie sont formés par des protubérances élastiques montés sur la totalité ou au moins une partie des spires dudit ressort ;
- au moins une protubérance une section qui est constante ou non;
- au moins une protubérance comporte une courbure qui est constante ou non ;
- au moins deux protubérances sont jointives;
- au moins une protubérance s'étend dudit ressort vers ledit arbre ou dudit ressort vers la paroi interne de ladite boîte ;
- les moyens élastiques d'accumulation d'énergie sont venus de forme avec ledit ressort ;
- le ressort et/ou les moyens élastiques d'accumulation d'énergie sont formés à base de silicium ou à base de métal ou d'alliage métallique ;
- le barillet comporte plusieurs ressorts empilés et travaillant en parallèle.

L'invention se rapporte également à une pièce d'horlogerie caractérisée en ce qu'elle comporte un barillet conforme à l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'un barillet actuel;
- les figures 2 et 3 sont des représentations vues de dessus de distributions possibles de dispositifs d'augmentation de couple selon l'invention ;
- les figures 4 à 7 sont des variantes possibles des moyens élastiques d'accumulation d'énergie selon l'invention.

### Description détaillée des modes de réalisation préférés

Comme expliqué ci-dessus, le but de la présente invention est de proposer un barillet dont le couple fourni est moins dépendant du degré d'armage du ressort mais également dont le couple est sensiblement équivalent ou augmenté pour garder ou améliorer l'autonomie du mouvement horloger dans lequel le barillet est monté.

Selon l'invention, le barillet comporte, en plus du ressort habituel, un dispositif d'augmentation de couple dudit ressort comprenant des moyens élastiques d'accumulation d'énergie rapportés sur ledit ressort afin que le couple du barillet soit personnalisé en fonction de la tension d'armage dudit au moins un ressort. Préférentiellement selon l'invention, les moyens élastiques d'accumulation d'énergie sont formés par des protubérances élastiques montés sur au moins une partie des spires dudit ressort. A leur état armé, les protubérances suivent le spiral, c'est-à-dire qu'ils sont contraints entre la boîte et/ou le reste du ressort et/ou l'arbre de pivotement comme un ressort habituel.

Des exemples non exhaustifs de distribution de dispositifs d'augmentation de couple 12, 22, 22' de barillet 11, 21 sont présentés aux figures 2 et 3. A la figure 2, on peut voir que le dispositif d'augmentation de couple 12 du barillet 11 comporte une unique série de moyens élastiques d'accumulation d'énergie 14 formée par une pluralité de protubérances élastiques 16 qui sont réparties sur toute la longueur L du ressort 17 et qui s'étendent du ressort 17 vers la paroi interne de la boîte 13.

A la figure 3, on peut voir que les dispositifs d'augmentation de couple 22, 22' du barillet 21 comporte chacun un série de moyens élastiques d'accumulation d'énergie 24, 24' formées par une pluralité de protubérances élastiques 26, 26' qui sont réparties chacune sur une partie de la longueur L du ressort 27. Ainsi, la série 24 distale du premier dispositif 22 est distribuée sur la spire externe du ressort 27 et comporte des protubérances élastiques 26 qui s'étendent du ressort 27 vers l'arbre 25. De plus, la série 24' proximale du deuxième dispositif 22' est distribuée sur la spire interne du ressort 27 et comporte des protubérances élastiques 26' qui s'étendent du ressort 27 vers la paroi interne de la boîte 23.

On comprend donc qu'un barillet selon l'invention peut comporter un ou plusieurs dispositifs d'augmentation de couple répartis sur une partie ou toute la longueur du ressort afin que la quantité de matière du ressort qui « travaille », c'est-à-dire celle susceptible d'être déformée pour emmagasiner de l'énergie, soit très sensiblement augmentée ce qui permet au barillet de garder une valeur de couple sensiblement équivalente par rapport à ceux comportant des ressorts actuels en S tout en ayant un encombrement au repos beaucoup plus réduit.

A titre d'exemple, un ressort actuel en S au repos, c'est-à-dire avant d'être monté dans la boîte du barillet de 1,2 cm de diamètre comporte un encombrement rectangulaire d'environ 6 cm sur 15 cm. Avantageusement selon l'invention, l'encombrement d'un ressort au repos selon l'invention est réduit à un diamètre compris entre 1 et 5 cm avec un pas entre les spires compris en 0,1 et 5 mm.

Bien entendu, au vu de la figure 3, on peut également considérer qu'un unique dispositif sur toute la longueur du ressort peut également comporter deux séries de moyens élastiques d'accumulation d'énergie dont la première série pourrait comporter des protubérances élastiques qui s'étendent du ressort vers l'arbre et dont la deuxième série pourrait comporter des protubérances élastiques qui s'étendent du ressort vers la paroi interne de la boîte.

Des variantes non exhaustives de protubérances élastiques 36, 46, 56, 76 sont présentées aux figures 4 à 7. A ces figures, les moyens élastiques d'accumulation d'énergie, c'est-à-dire protubérances élastiques 36, 46, 56, 76, sont venus de forme avec le ressort 37, 47, 57, 77. Il n'est toutefois pas essentiel que les moyens élastiques d'accumulation d'énergie soient venus de forme avec le ressort. A titre d'exemple, ils peuvent être fabriqués séparément et solidarisés ensuite, pour finalement être intégrés au barillet.

Dans une première variante illustrée à la figure 4, la protubérance 36 est solidaire du ressort 37 et forme une excroissance en saillie selon une courbe C₁ qui peut être un rayon en formant un angle α₁ aigu par rapport à la courbure du ressort 37. Enfin, la protubérance 36 comporte une épaisseur E₁ qui peut être égale ou différente à celle E du ressort 37.

Dans une deuxième variante illustrée à la figure 5, la protubérance 46 est solidaire du ressort 47 et forme une excroissance en saillie selon une courbe C₂ qui peut être un rayon en formant un angle α₂ obtus par rapport à la courbure du ressort 47. Enfin, la protubérance 46 comporte une épaisseur E₂ qui peut être égale ou différente à celle E du ressort 47.

Dans une troisième variante illustrée à la figure 6, la protubérance 56 est solidaire du ressort 57 et forme une excroissance en saillie selon une courbe C₃ non symétrique en formant un angle α₃ de départ aigu par rapport à la courbure du ressort 57. Enfin, la protubérance 56 comporte une épaisseur variable avec une épaisseur minimale E₃ et une épaisseur maximale E₃' qui peuvent être chacune égale ou différente à celle E du ressort 57.

Enfin, dans une quatrième variante illustrée à la figure 7, deux excroissances sont jointives pour former la protubérance 76 qui est solidaire du ressort 77 à un seul endroit formant ainsi une base. La protubérance 76 est sensiblement en forme de Y en saillie dont chaque branche partant de ladite base s'étend selon une courbe C₅, C₆ qui peuvent chacune être un rayon en formant des angles α₅ et α₆ respectivement aigu et obtus par rapport à la courbure du ressort 77. Enfin, les deux branches de la protubérance 76 comportent respectivement des épaisseurs E₅, E₆ qui peuvent être chacune égale ou différente à celle E du ressort 77.

On comprend donc qu'au moins une protubérance 16, 26, 36, 46, 56, 76 des moyens élastiques d'accumulation d'énergie peut comporter une section constante, ou non, et/ou une courbure qui est constante, ou non. De plus, au moins deux de ces protubérances 16, 26, 36, 46, 56, 76 peuvent être jointives. Enfin, leur distribution peut être symétrique ou non sur tout ou partie du ressort 17, 27, 37, 47, 57, 77.

Au vu des explications ci-dessus, le ressort et/ou les moyens élastiques d'accumulation d'énergie peuvent être formés avantageusement selon des techniques d'enlèvement de matière, c'est-à-dire du type négatif, comme un gravage ionique réactif profond d'une plaquette de silicium monocristallin, ou au contraire, selon des techniques d'ajout de matière, c'est-à-dire du type positif, comme un électroformage mêlant au moins une étape de photolithographie et au moins une étape de galvanoplastie.

A titre alternatif, le ressort et/ou les moyens élastiques d'accumulation d'énergie peuvent également être formés selon les techniques hybrides du type positif et négatif, comme un substrat gravé dont les gravures sont destinées à recevoir un matériau au moins partiellement amorphe par formage à chaud tel qu'un métal ou qu'un alliage métallique.

Ainsi, grâce à la précision des techniques du type positif et/ou positif, il est possible de fabriquer en série des ressorts asymétriques qui autorisent la personnalisation du couple de leur barillet en fonction leur tension d'armage. On peut alors parfaitement développer un ressort, à titre d'exemple, qui, quelle que soit sa tension d'armage, autorise un couple du barillet sensiblement constant.

Toutefois, ce genre de techniques pouvant limiter l'épaisseur de la pièce fabriquée, il est proposé que la barillet comporte plusieurs ressorts empilés qui travaillent en parallèle pour obtenir par exemple une hauteur H semblable aux ressorts actuels en S.

On comprend donc que le ressort et/ou les moyens élastiques d'accumulation d'énergie peuvent être formés à partir de silicium, comme, de manière non limitative, du silicium monocristallin, son carbure, son nitrure ou son oxyde sous forme cristallisée ou non, ou d'un matériau métallique amorphe ou non comme, de manière non limitative, du nickel ou un alliage à base de nickel et de phosphore.

Bien entendu, la présente invention ne se limite pas à l'exemple illustré mais est susceptible de diverses variantes et modifications qui apparaîtront à l'homme de l'art. En particulier, les formes des protubérances 16, 26, 36, 46, 56, 76 des moyens élastiques d'accumulation d'énergie présentées aux figures 2 à 8 peuvent différer pour rendre plus constant et plus important le couple fourni par le barillet.

De plus, l'invention s'entend comme une source d'énergie mécanique en général et non spécifiquement à un barillet horloger.

## Revendications

1. Barillet (11, 21) comportant une boîte (13, 23) destinée à recevoir un arbre de pivotement (15, 25) et au moins un ressort (17, 27, 37, 47, 57, 77), ledit au moins un ressort en forme de spirale étant monté entre la paroi interne de la boîte (13, 23) et la paroi externe de l'arbre de pivotement (15, 25), et pouvant être armé pour fournir de l'énergie mécanique **caractérisé en ce que** le barillet (11, 21) comporte en outre un dispositif d'augmentation (12, 22, 22') de couple dudit au moins un ressort comprenant des moyens élastiques d'accumulation d'énergie (14, 24, 24') rapportés sur ledit ressort afin que le couple du barillet (11, 21) soit personnalisé en fonction de la tension d'armage dudit au moins un ressort.

2. Barillet (11, 21) selon la revendication précédente, **caractérisé en ce que** les moyens élastiques d'accumulation d'énergie (14, 24, 24') sont formés par des protubérances élastiques (16, 26, 36, 46, 56, 76) montés sur au moins une partie des spires dudit ressort.

3. Barillet (11, 21) selon la revendication précédente, **caractérisé en ce qu'**au moins une protubérance (16, 26, 36, 46, 56, 76) comporte une section qui est constante.

4. Barillet (11, 21) selon la revendication 2 ou 3, **caractérisé en ce qu'**au moins une protubérance (16, 26, 36, 46, 56, 76) comporte une section qui n'est pas constante.

5. Barillet (11, 21) selon l'une des revendications 2 à 4, **caractérisé en ce qu'**au moins une protubérance (16, 26, 36, 46, 56, 76) comporte une courbure (C₁, C₂, C₃, C₄, C₅, C₆) qui est constante.

6. Barillet (11, 21) selon l'une des revendications 2 à 5, **caractérisé en ce qu'**au moins une protubérance (16, 26, 36, 46, 56, 76) comporte une courbure (C₁, C₂, C₃, C₄, C₅, C₆) qui n'est pas constante.

7. Barillet (11, 21) selon l'une des revendications 2 à 6, **caractérisé en ce qu'**au moins deux protubérances (16, 26, 36, 46, 56, 76) sont jointives.

8. Barillet (11, 21) selon l'une des revendications 2 à 7, **caractérisé en ce qu'**au moins une protubérance (16, 26, 36, 46, 56, 76) s'étend dudit ressort vers ledit arbre.

9. Barillet (11, 21) selon l'une des revendications 2 à 8, **caractérisé en ce qu'**au moins une protubérance (16, 26, 36, 46, 56, 76) s'étend dudit ressort vers la paroi interne de ladite boîte.

10. Barillet (11, 21) selon l'une des revendications précédentes, **caractérisé en ce que** les moyens élastiques d'accumulation (14, 24, 24') d'énergie sont venus de forme avec ledit ressort.

11. Barillet (11, 21) selon l'une des revendications précédentes, **caractérisé en ce que** le ressort (17, 27, 37, 47, 57, 77) et/ou les moyens élastiques d'accumulation d'énergie (14, 24, 24') sont formés à base de silicium.

12. Barillet (11, 21) selon l'une des revendications précédentes, **caractérisé en ce que** le ressort (17, 27, 37, 47, 57, 77) et/ou les moyens élastiques d'accumulation d'énergie (14, 24, 24') sont formés à base de métal ou d'alliage métallique.

13. Barillet (11, 21) selon l'une des revendications précédentes, **caractérisé en ce qu'**il comporte plusieurs ressorts empilés et travaillant en parallèle.

14. Pièce d'horlogerie **caractérisée en ce qu'**elle comporte un barillet (11, 21) conforme à l'une des revendications précédentes.
